# EUROPEAN PATENT APPLICATION

(11) **EP 1 657 682 A2**
(43) Date of publication of application: **17.05.2006**
(21) Application number: 05023048.1
(22) Date of filing: 21.10.2005
(51) Int. Cl.: G06T 15/70

(54) **Apparatus and method for providing a personalized 3D animation file in a mobile communication terminal**

(30) Priority: 01.11.2004 KR 2004087794
(71) Applicant: Samsung Electronics Co., Ltd., Suwon-si, Gyeonggi-Do (KR)
(72) Inventor: Lee, Dong-Gyo, Yeongtong-gu Suwon-si Gyeonggi-do (KR)
(74) Representative: Grünecker, Kinkeldey, Stockmair & Schwanhäusser Anwaltssozietät

(57) **Abstract**

An apparatus and method for providing a three-dimensional (3D) animation file in which a user's personality is reflected in a mobile communication terminal. A 3D application interface (API) can input, into a 3D animation file, information on image data selected by the user, and a 3D engine can map the image data selected by the user to a specific portion of 3D modeling data included in the 3D animation file. The information on the image data selected by the user serves as information of a texture or background image, and can be included in a user attribute field of the 3D animation file. Image data corresponding to the texture image information included in the user attribute field can be mapped to the 3D modeling data, and image data corresponding to the background image information can be used as a background image of an animation of the 3D modeling data.

## Description

The present invention relates generally to a mobile communication terminal, and more particularly to three-dimensional (3D) animation.

Today, mobile communication terminals can display three-dimensional (3D) images and animation as well as two-dimensional (2D) images by a built-in 3D engine. Mobile communication terminals can also use a 3D image or animation as a background or as notification of an incoming call. The 3D engine loads, from a 3D animation file, 3D modeling data. The 3D modeling data includes length, height, and depth, and is configured by 3D coordinates for the x, y, and z axes. The 3D engine is a program for generating an animation of the 3D modeling data according to animation information set in each 3D animation file, and displaying the generated animation on a screen of the mobile communication terminal. The animation information includes timing information of the 3D modeling data included in the 3D animation file and motion path information of the 3D modeling data.

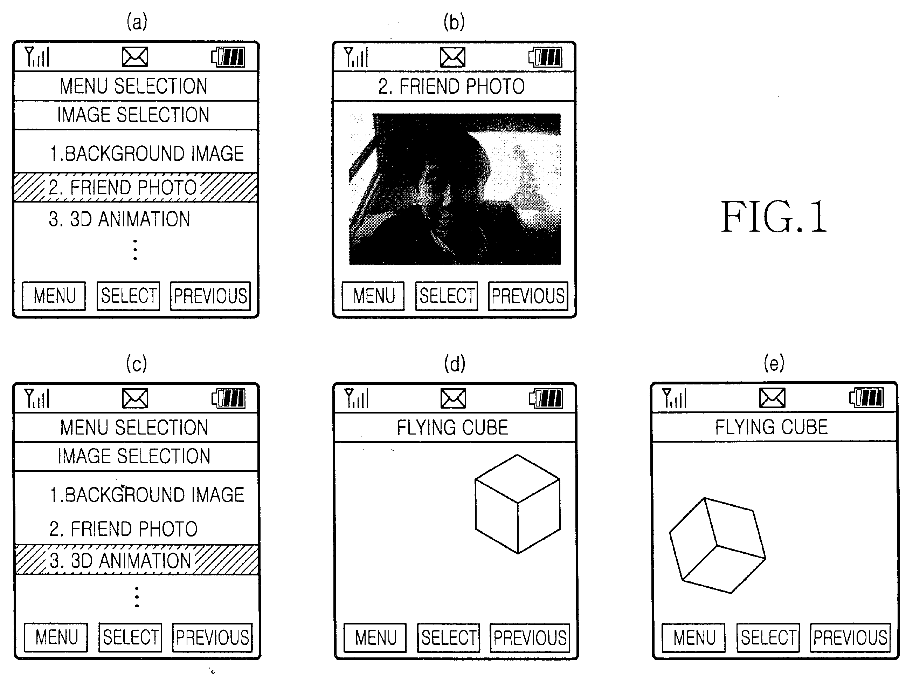

FIG. 1 illustrates a display image of a display unit displaying a 3D animation file or general image data in a conventional mobile communication terminal with a conventional 3D engine. The 3D engine is different from that used in a general personal computer (PC) or workstation in that the mobile terminal 3D engine is able to quickly perform processing in a low-level system environment with the less sophisticated hardware of the mobile communication terminal. Hereinafter, the 3D engine for use in the mobile communication terminal is referred to as the mobile 3D engine.

Referring to FIG. 1, FIG. 1 (a) illustrates the case where a user selects general image data rather than a 3D animation file from among displayed image data. As illustrated in FIG. 1(b), the conventional mobile communication terminal decodes the image data selected by the user and then displays the decoded image data on the display unit, using the mobile 3D engine. When the user selects the 3D animation file as illustrated in FIG. 1(c), it is generated and displayed as illustrated in FIGS. 1(d) and 1(e). The 3D animation of the 3D modeling data is generated on the basis of animation information included in the 3D animation file.

Most mobile communication terminal users can generate desired images at any time as well as can use stored or downloaded image data, since digital cameras are usually mounted in the terminals. Accordingly, the users can use, as background images of the mobile communication terminals, image data that reflects their personality, such as photos of themselves or of their friends and lovers.

As mentioned above, conventional mobile 3D engines parse a 3D animation file already stored in advance in the mobile communication terminal, and generate and display animation of 3D modeling data included in the 3D animation file according to preset animation information. In effect, users can only use pre-stored 3D animation files that do not reflect their personality. Although images of the 3D animation file can be displayed, users cannot reflect their personality in the 3D animation file.

Accordingly, the present invention has been designed to solve the above and other problems occurring in the prior art. Therefore, it is the object of the present invention to provide an apparatus and method by which a user can generate and utilize a three-dimensional (3D) animation file in which the user's personality is reflected.

This object is solved by the subject matter of the independent claims.

Preferred embodiments are defined in the dependent claims.

In accordance with an embodiment of the present invention, the above can be accomplished by an apparatus for providing a three-dimensional (3D) animation file in which a user's personality is reflected in a mobile communication terminal. The apparatus includes a 3D application interface (API) for storing image information on image data selected by the user in the 3D animation file, the 3D animation file including 3D modeling data and animation information for generating an animation of the 3D modeling data; a 3D engine for generating the animation of the 3D modeling data included in the 3D animation file and outputting the generated animation to a display unit of the mobile communication terminal; and a control unit for referring to the image information to load corresponding image data and mapping the image data to the 3D modeling data.

In accordance with another embodiment of the present invention, the above can be accomplished by a method for providing a three-dimensional (3D) animation file in which a user's personality is reflected in a mobile communication terminal. The method includes selecting, by the user, specific image data; inputting image information on the image data selected by the user into the 3D animation file, the 3D animation file including 3D modeling data and animation information for generating an animation of the 3D modeling data; referring to the image information to load corresponding image data; mapping the image data to the 3D modeling data; and generating the animation of the 3D modeling data and outputting the generated animation to a display unit of the mobile communication terminal.

The present invention will be more clearly understood from the following detailed description taken in conjunction with the accompanying drawings, in which:
FIG. 1 illustrates an example of a display image of a display unit displaying decoded image data in a conventional mobile communication terminal;
FIG. 2 is a block diagram illustrating a mobile communication terminal in accordance with an embodiment of the present invention;
FIG. 3 is a flow diagram illustrating a procedure for including texture and background image information associated with three-dimensional (3D) modeling data in a 3D animation file in the mobile communication terminal of FIG. 2;
FIG. 4 is a flow diagram illustrating a procedure for processing a 3D animation file including information on image data selected by a user in the mobile communication terminal of FIG. 2;
FIG. 5 is a flow diagram illustrating a 3D graphic processing subroutine for mapping, to 3D modeling data, image data selected by the user in the mobile communication terminal of FIG. 2;
FIG. 6 illustrates an example of 3D modeling data in the course of 3D graphic processing in accordance with an embodiment of the present invention; and
FIG. 7 illustrates an example of a display image of a display unit displaying an image selected by the user mapped to 3D modeling data in the mobile communication terminal of FIG. 2.

Embodiments of the present invention will be described in detail herein below with reference to the accompanying drawings. In the drawings, the same or similar elements are denoted by the same reference numerals even though they are depicted in different drawings. Additionally, in the following description and the accompanying drawings, a detailed description of known functions and configurations incorporated herein will be omitted for conciseness.

In accordance with the present invention, image data in which a user's personality is reflected, can be mapped to three-dimensional (3D) modeling data included in a 3D animation file, when the 3D animation file is displayed. Animation of the 3D modeling data is generated according to animation information in the 3D animation file to reflect the user's personality.

Preferably, the present invention includes information on user image data in a Mobile 3D Graphics API (M3G) format serving as a 3D animation file format of the Java Specification Request 184 (JSR184) technology standard. For convenience, the field including information on the user image data is referred to as the user attribute field.

The 3D animation file used in an embodiment of the present invention includes the user attribute field for storing information on image data selected by the user, and user image mapping information on what portion of the 3D modeling data is mapped to the image data The 3D animation file may be provided by a service provider or manufacturer of the mobile communication terminal through a wireless data network or an external device such as a personal computer (PC).

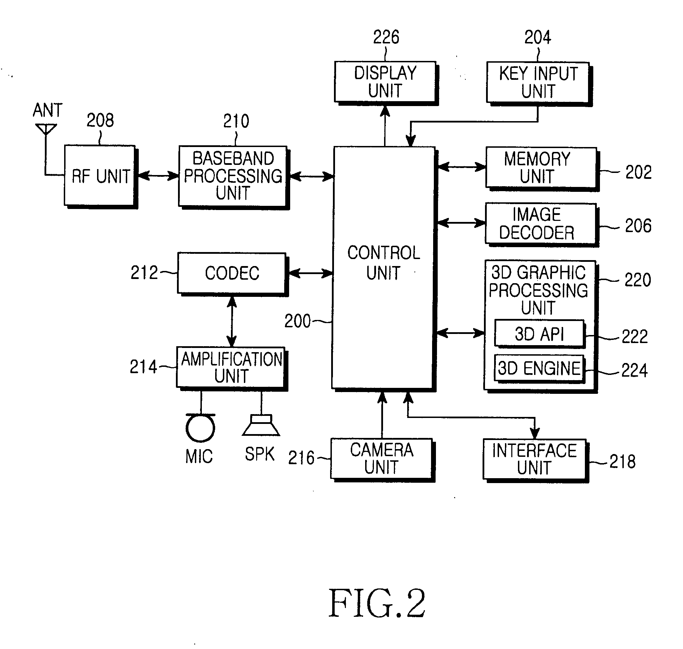

FIG. 2 is a block diagram illustrating a mobile communication terminal in accordance with an embodiment of the present invention. Referring to FIG. 2, the mobile communication terminal includes a memory unit 202, a key input unit 204, a display unit 226, a baseband processing unit 210, a coder-decoder (CODEC) 212, an image decoder 206, a 3D graphics processing unit 220, and a control unit 200 connected to a camera unit 216 and an interface unit 218. The control unit 200 processes voice and data according to a protocol for telephone communication, data communication, or wireless Internet access, and controls the respective components of the mobile communication terminal. A description of the processing and control operation for the telephone communication, data communication, or wireless Internet access in the control unit 200 will be omitted.

The control unit 200 receives input from the key input unit 204, and controls the display unit 226 to display image information generated in response to the user input. The control unit 200 controls the 3D graphic processing unit 220 to map general image data to 3D modeling data in a 3D animation file. When the general image data is mapped to the 3D modeling data, animation of the 3D modeling data can be generated and displayed on the display unit 226 at the direction of the control unit 200.

The 3D graphics processing unit 220 includes a 3D application interface (API) 222 for applying the general image data selected by the user to a 3D animation file, and a 3D engine 224 for mapping general image data designated by the 3D API 222 to 3D modeling data included in the 3D animation file. The 3D API 222 receives information on the image data from the control unit 200, and can include the received image information in the 3D animation file according to a control operation of the control unit 200.

When the 3D animation file including the information on the image data selected by the user (referred to as the user image data) is displayed, the control unit 200 loads image data corresponding to the image information included in the 3D animation file selected by the user (referred to as the user 3D animation file), and decodes the loaded image data in the image decoder 206. Then, the decoded image data is input to the 3D engine 224. The decoded image data is mapped to 3D modeling data included in the user 3D animation file. Animation data stored in a frame buffer is output to the display unit 226 by the 3D engine 224 which may be based on the JSR184 technology standard.

The memory unit 202 includes a read only memory (ROM), flash memory, random access memory (RAM), etc. The ROM stores a program for the processing and control operation of the control unit 200 and various reference data. The RAM provides working memory for the control unit 200. The flash memory provides an area for storing various updateable data. The memory unit 202 stores general image data and 3D animation files. The data can be extemally downloaded via the interface unit 218, or a wireless data network (not shown).

The interface unit 218 performs interfacing operation for the mobile communication terminal with an external device, such as a PC. The key input unit 204 includes various keys, such as number keys, and provides key input for the user to the control unit 200. The display unit 226 may include a liquid crystal display (LCD), and generates and provides various types of information in image form according to a control operation of the control unit 200.

A radio frequency (RF) unit 208 transmits an RF signal to or receives an RF signal from a base station. The RF unit 208 converts received signals into intermediate frequency (IF) signals to output the IF signal to the baseband processing unit 210, and converts IF signals input from the baseband processing unit 210, into an RF signal for transmission.

The baseband processing unit 210 serves as a baseband analog ASIC (BBA) for providing an interface between the control unit 200 and the RF unit 208, and converts a digital signal of a baseband applied from the control unit 100 into an analog IF signal to apply to the RF unit 208. The baseband processing unit 210 converts analog IF signals from the RF unit 208 into digital signals for the control unit 200.

The CODEC 212 is coupled to the control unit 200, a microphone (MIC) and a speaker (SPK) through an amplification unit 214. It performs pulse code modulation (PCM) coding on a voice signal input from the microphone to output voice data to the control unit 200, and performs PCM decoding on voice data input from the control unit 200 to output a voice signal to the speaker through the amplification unit 214.

The amplification unit 214 amplifies the voice signal input from the microphone or the signals output to the speaker, adjusts volume of the speaker, and gain of the microphone according to a control operation of the control unit 200.

The camera unit 216, operably connected to the control unit 200 generates image data according to key input of the user. The image decoder 206 receives and decodes image data, selected by the user, from the control unit 200, and then returns the decoded image data to the control unit 200. The control unit 200 outputs the received decoded image data to the display unit 226.

In accordance with an embodiment of the present invention, the mobile communication terminal includes the 3D graphic processing unit 220 with the 3D API 222 and the 3D engine 224 such that an image selected by the user can be mapped to 3D modeling data included in the 3D animation file. The user image data can use photo images generated from the camera unit 216 or images downloaded,by the user. As a result, the user can generate a 3D animation file in which a desired image is mapped to the 3D modeling data, so that a 3D animation with the user's personality is reflected can be displayed. The generated 3D animation file can be set as a background image in the mobile communication terminal according to the user's selection.

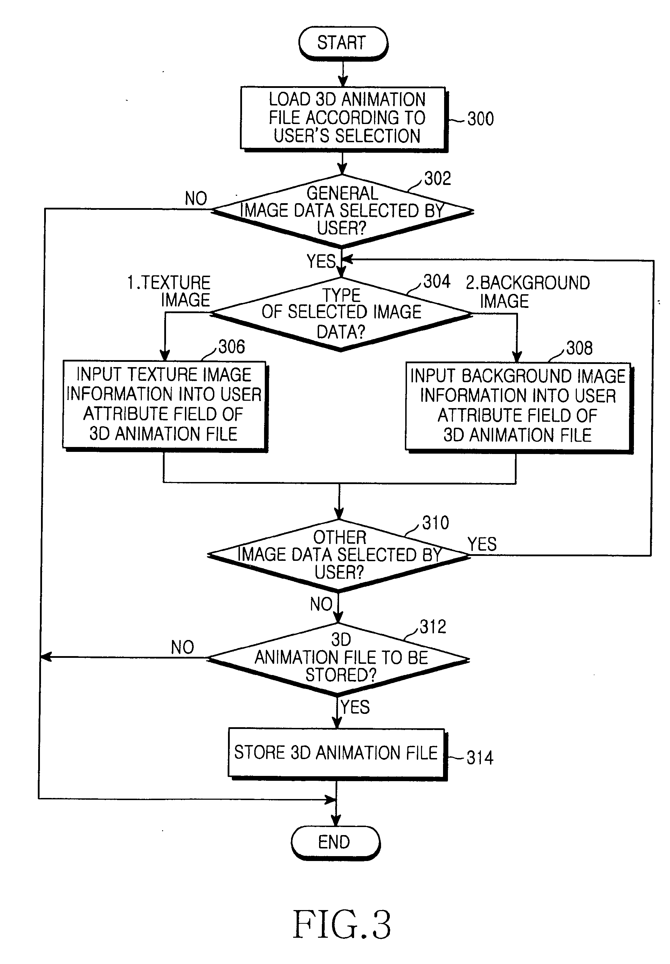

FIG. 3 illustrates a procedure for including image data in a specific 3D animation file according to operation of the 3D API 222. When the user selects one of the 3D animation files, the control unit 200 proceeds to step 300 to load the selected 3D animation file from the memory unit 202. Subsequently, the control unit 200 proceeds to step 302 to determine if the user has selected general image data, that is, image data of a photo image generated by the user, or a downloaded 2D or 3D still picture.

If the user has selected image data in step 302, the control unit 200 proceeds to step 304 to determine if the selected image is a texture image or a background image. Here, the texture image is mapped to 3D modeling data of the 3D animation file loaded in step 300, and the background image is used as background for the 3D animation.

If the user has selected specific image data as the texture image in step 304, the control unit 200 proceeds to step 306 to input information on the image data selected in step 302 serving as texture image information into the user attribute field of the 3D animation file selected by the user in step 300. However, if the image selected by the user is the background image in step 304, the control unit 200 proceeds to step 308 to input the image data selected in step 302 into the user attribute field of the 3D animation file selected by the user in step 300. Herein, the texture or background image information may be an address of the selected image data.

When the user selects the image data to be used as the texture or background image in step 306 or 308, respectively, the control unit 200 proceeds to step 310 to determine if the user has selected other image data. If the user has selected other image data, the control unit 200 returns to step 304 to input the image data selected by the user into the user attribute field in step 306 or 308. If, however, the user has not selected other image data, the control unit 200 proceeds to step 312 to determine whether the 3D animation file is to be stored. If so, the control unit 200 proceeds to step 314 to store the user 3D animation file and then terminates the procedure.

The user can select image data in the mobile communication terminal that reflects the user personality, and can set the image data to be mapped to 3D modeling data or to be set as a background image of an animation.

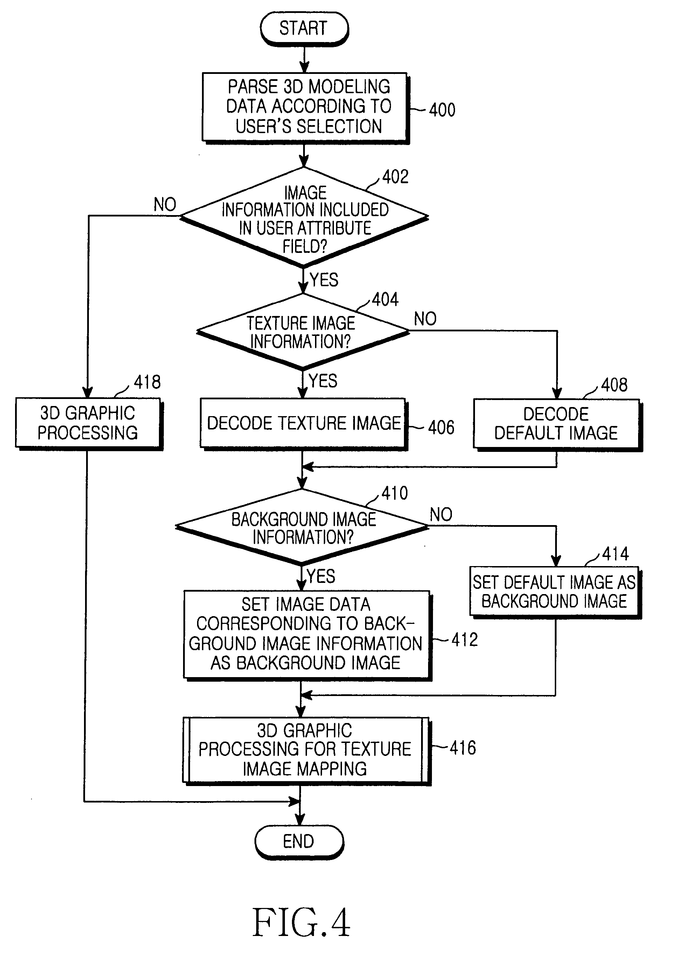

FIG. 4 illustrates a procedure for displaying the user 3D animation file stored through the procedure of FIG. 3. Referring to FIG. 4, when the user has selected displaying a specific user 3D animation file, the control unit 200 proceeds to step 400 to parse the selected user 3D animation file into the user attribute field, animation information, 3D modeling data, etc. Subsequently, the control unit 200 proceeds to step 402 to check if image information is included in the user attribute field of the user 3D animation file parsed in step 400. If no image information is included in the user attribute field, the control unit 200 proceeds to step 418 to generate and display an animation of the 3D animation file parsed in step 400. To do so, conventional mobile 3D engine processes the 3D animation file. However, if it is determined that information on specific image data is included in the user attribute field of the user 3D animation file in step 402, the control unit 200 proceeds to step 404 to check if texture image information is included in the user attribute field. If so, the control unit 200 proceeds to step 406 to load, from the memory unit 202, image data corresponding to the texture image information and decode the loaded image data. If, however, no texture image information is included in the user attribute field (step 404), the control unit 200 proceeds to step 408 to decode a default image. The default image may be a blank image, and may be preset in the 3D animation file.

When the image data has been decoded in step 406 or 408, the control unit 200 proceeds to step 410 to check if background image information is included in the user attribute field. If the background image information is included, the control unit 200 proceeds to step 412 to load, from the memory unit 202, image data corresponding to the background image information and decode the loaded image data. If, however, no background image information is included, the control unit 200 proceeds to step 414 to set a default image as the background. The default image may be blank image, and may be preset in the 3D animation file, as mentioned in step 408.

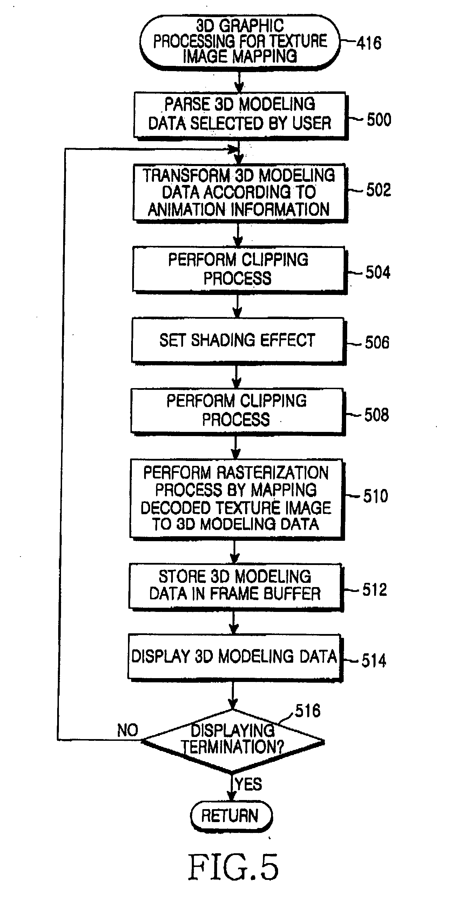

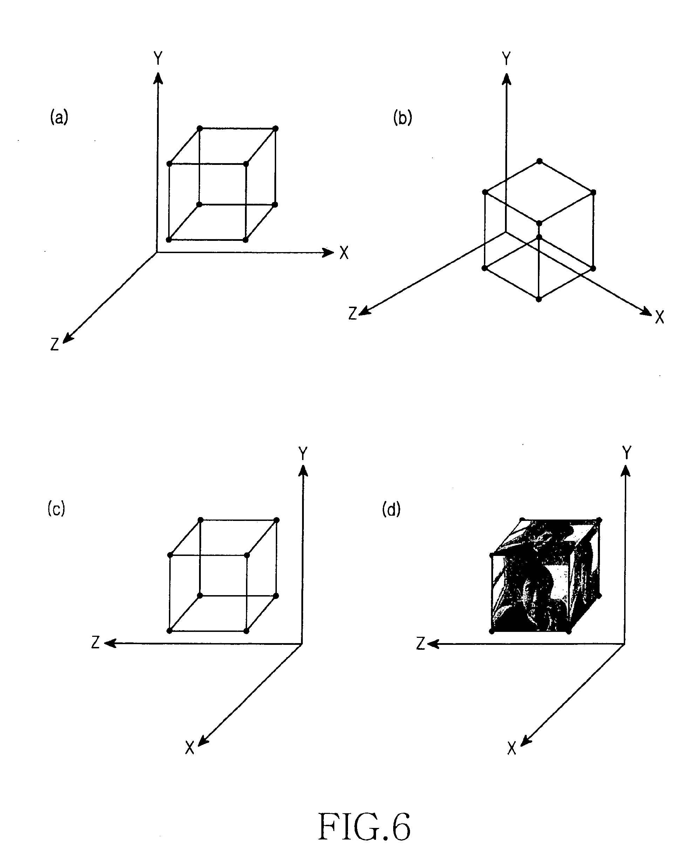

When the image data to be used as the texture image has been decoded in step 406 or 408, and the image data to be used as the background image has been decoded in step 412 or 414, the control unit 200 proceeds to step 416. In step 416, the image data included in the 3D animation file is mapped to 3D modeling data through the 3D API 222, an animation of the 3D modeling data is generated according to the animation information included in the 3D animation file, and the generated animation is displayed on the display unit 226. Step 416 will be described in detail with reference to FIG. 5 and FIG. 6.

FIG. 5 illustrates step 416 of FIG. 4 in detail, and is a flow diagram illustrating a 3D graphic processing subroutine in which the control unit 200 maps the image data selected by the user to the 3D modeling data through the 3D engine 224 in accordance with an embodiment of the present invention. FIG. 6 illustrates an example of the 3D modeling data transformed in steps 502 and 510 of FIG. 5.

Referring to FIG. 5, in performing step 416 of FIG. 4, the control unit 200 proceeds to step 500 to parse the 3D modeling data selected by the user into points, lines, triangles, quadrangles, and animation information, etc. through the 3D engine 224. When the 3D modeling data parsed in step 500 is implemented and generates motion in 3D coordinates according to the animation information, the 3D modeling data transformed according to the motion is computed in step 502. The transformation process in step 502 will be described with reference to FIGS. 6(a) and 6(b).

FIG. 6(a) illustrates an example of the 3D modeling data of a cube configured by points and lines. FIG. 6(b) illustrates the 3D modeling data transformed on the basis of the 3D modeling data according to the animation information. Referring to FIGS. 6(a) and 6(b), when the 3D modeling data configured by the points and lines parsed in step 500 goes through the process of step 502, the 3D modeling data is transformed as illustrated in FIG. 6(b), rotated and moved to the left with respect to the y axis.

In step 502, when a coordinate computation of the 3D modeling data is completed, the control unit 200 proceeds to step 504 to perform a clipping process to clip a portion of the 3D animation to minimize data transfer when the 3D animation is displayed on the mobile communication terminal. When the clipping process is completed, the control unit 200 proceeds to step 506 to set the shading effect according to light intensity or shadow, etc. in the 3D modeling data transformed in step 502. Subsequently, the control unit 200 proceeds to step 508 to repeat the same clipping process as that of step 504. This clipping process minimizes loaded data, and may be performed in every step, if necessary. Subsequently, the control unit 200 proceeds to step 510 to perform a rasterization process by mapping the texture image decoded in step 406 or 408 of FIG. 4 to the 3D modeling data transformed in step 502. Herein, the rasterization process refers to a process for generating a surface on 3D modeling data generally configured by points and lines.

Generally, when the rasterization process is performed in the conventional mobile communication terminal, only a preset surface is generated by animation information of a 3D animation file. However, the control unit 200 of the mobile communication terminal in accordance with an embodiment of the present invention controls the 3D engine 224 to perform the rasterization process by mapping the image data selected as the texture image by the user to a surface generated on the 3D modeling data. The rasterization process in step 510 will be described with reference to FIGS. 6(c) and 6(d).

FIG. 6(c) illustrates an example of 3D modeling data of a cube configured only by points and lines. FIG. 6(d) illustrates the case where the rasterization process is performed by mapping the texture image selected by the user to the 3D modeling data of FIG. 6(c). Here, the mapped texture image is the texture image input by the user in step 306 of FIG. 3, and is the image data corresponding to the texture image information input into the user attribute field of the 3D animation file. When the user inputs other texture image information in step 306 and then stores the input texture image information in the user 3D animation file, the rasterization process is performed by mapping the other texture image to the 3D modeling data in FIG. 6(d).

When the process for mapping the texture image to the 3D modeling data is completed in step 510, the control unit 200 proceeds to step 512 to store, in the frame buffer, the 3D modeling data in which the mapping is completed, and proceeds to step 514 to display the 3D modeling data stored in the frame buffer. The control unit 200 then proceeds to step 516 to determine if the user has terminated displaying the 3D animation. If the user has not selected termination, the control unit 200 proceeds to step 502 to compute coordinates of the 3D modeling data transformed according to the animation information parsed in step 500, and repeatedly performs the process of steps 502 to 516 until the user terminates the process.

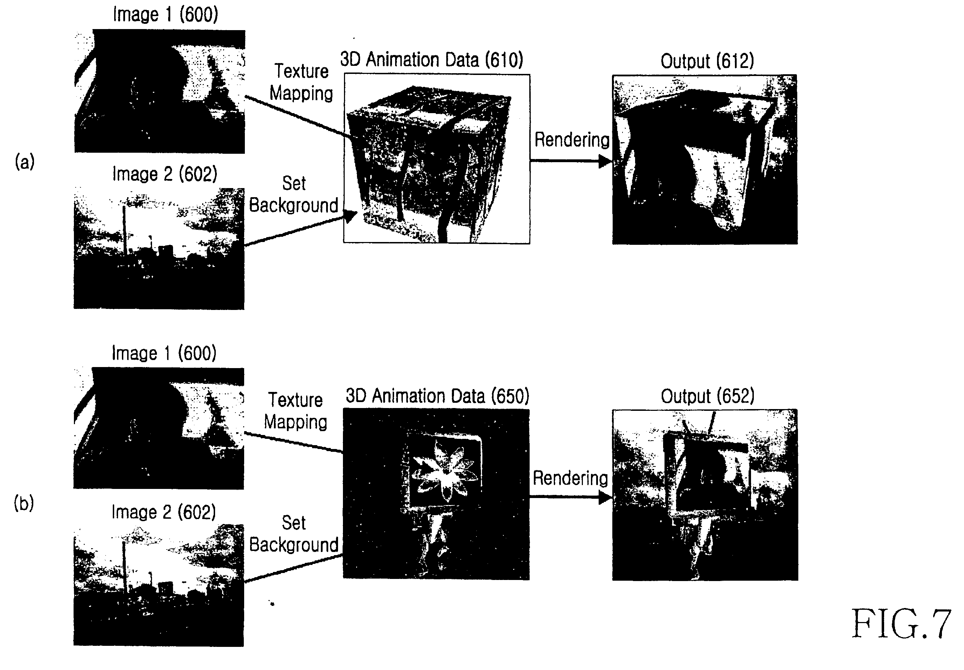

FIG. 7 illustrates an example of a 3D animation displayed in accordance with an embodiment of the present invention. The above-mentioned 3D modeling data has been described as a cube to provide an example. However, the present invention can use 3D modeling data of various forms, as well as the 3D modeling data of the cube.

Referring to FIG. 7 in which the 3D modeling data of various forms is used, FIG. 7(a) illustrates an example of a 3D animation image where the user downloads a 3D animation file including cube-shaped 3D modeling data and applies a photo image, serving as a texture image, and a background image, to the 3D modeling data. FIG. 7(b) illustrates an example of a 3D animation image where the user downloads a 3D animation file including 3D modeling data of a robot with a TV-shaped head, and applies a photo image, serving as a texture image, and a background image to the 3D modeling data. It can be seen that FIG. 7(a) illustrates an example of the case where the texture image selected by the user is mapped to all surfaces of the 3D modeling data, while FIG. 7(b) illustrates an example of the case where the texture image selected by the user is mapped to one surface of the 3D modeling data. In accordance with an embodiment of the present invention, the 3D animation file includes information on what portion of the 3D modeling data is mapped to, the image selected by the user, as well as the user attribute field including information about the image selected by the user.

FIG. 7(a) illustrates an example where the user selects Image-1 600 as a texture image and selects Image-2 602 as a background image. In this case, the control unit 200 inputs information of the corresponding images 600 and 602 into the user attribute field of the 3D animation file. When the user selects the corresponding 3D animation file, the control unit 200 decodes image data corresponding to the information of the texture image 600 included in the user attribute field, and maps the decoded image data to 3D modeling data 610 of the 3D animation file. As seen in a 3D animation 612, the control unit 200 decodes image data corresponding to information of the background image selected by the user, sets the decoded image data as a background image of an animation, generates the animation of the 3D modeling data according to preset animation information, and outputs the generated animation to the display unit 226.

FIG. 7(b) illustrates the example where the 3D modeling data of the robot with the TV-shaped head is mapped to the texture image 600. The user selects Image-1 600 as a texture image and selects Image-2 602 as a background image. In this case, the control unit 200 inputs information of the corresponding images 600 and 602 into the user attribute field of the 3D animation file. When the user selects the robot 3D animation file, the control unit 200 decodes image data corresponding to the information of the texture image 600 included in the user attribute field, and maps the decoded image data to 3D modeling data 650 of the 3D animation file. In FIG. 7(a), the texture image selected by the user is mapped to all surfaces of the 3D modeling data. However, in FIG. 7(b), the texture image selected by the user is mapped to one surface of the 3D modeling data. Thus, it can be seen that the 3D animation file can use 3D modeling data of various forms in accordance with an embodiment of the present invention.

The present invention includes the 3D API capable of inputting, into a 3D animation file, information on image data selected by a user, and the 3D engine capable of mapping the image data selected by the user to a specific portion of 3D modeling data included in the 3D animation file. In accordance with the present invention, the information on the image data selected by the user serves as information of a texture or background image, and can be included in a user attribute field of the 3D animation file. Image data corresponding to the texture image information included in the user attribute field can be mapped to the 3D modeling data, and image data corresponding to the background image information can be used as a background image for an animation of the 3D modeling data. Accordingly, the user can generate the 3D animation file in which a desired photo image or downloaded image, etc. is mapped to the 3D modeling data. Therefore, 3D animation in which the users personality is reflected can be displayed. The generated 3D animation file can be utilized as a background image of a mobile communication terminal according to the user's selection.

Although certain embodiments of the present invention have been disclosed for illustrative purposes, those skilled in the art will appreciate that various modifications, additions and substitutions are possible, without departing from the scope of the present invention. More specifically, an example in which the user attribute field is added to the format of a 3D animation file conventionally used has been described. However, if the format of the 3D animation file has sufficient space to include content of the user attribute field, the format of the 3D animation file may be used as is. Therefore, the present invention is not limited to the above-described embodiments, but is defined by the following claims.

## Claims

1. An apparatus for providing a three-dimensional, 3D, animation file reflecting a user's personality in a mobile communication terminal, comprising:
a 3D application interface, API, for storing image information on image data selected by the user in the 3D animation file, the 3D animation file including 3D modeling data and animation information for generating an animation of the 3D modeling data;
a 3D engine for generating the animation of the 3D modeling data included in the 3D animation file and outputting the generated animation to a display unit of the mobile communication terminal; and
a control unit for referring to the image information to load corresponding image data and mapping the image data to the 3D modeling data.

2. The apparatus according to claim 1, wherein the image information uses a memory address of the image data.

3. The apparatus according to claim 1 or 2, wherein the 3D animation file includes a user attribute field in which the image information is stored.

4. The apparatus according to one of claims 1 to 3, wherein the 3D engine conforms to a Java Specification Request 184, JSR184, technology standard.

5. The apparatus according to one of claims 1 to 4, wherein the control unit utilizes the 3D animation file including the image information as a background image according to the user's selection.

6. The apparatus according to one of claims 1 to 5, wherein the control unit inputs, into the 3D engine, the image information serving as background image information of the 3D modeling data according to the user's selection.

7. The apparatus according to claim 6, wherein the control unit uses image data corresponding to the background image information serving as a background image of the animation of the 3D modeling data.

8. The apparatus according to one of claims 1 to 7, wherein the 3D animation file is provided from a service provider or manufacturer of the mobile communication terminal through a wireless data network or an external device.

9. A method for providing a three-dimensional, 3D, animation file reflecting a user's personality in a mobile communication terminal, comprising:
selecting specific image data;
inputting image information on the image data into the 3D animation file, the 3D animation file including 3D modeling data and animation information for generating an animation of the 3D modeling data;
referring to the image information to load corresponding image data;
mapping the image data to the 3D modeling data; and
generating the animation of the 3D modeling data and outputting the generated animation to a display unit of the mobile communication terminal.

10. The method according to claim 9, wherein inputting comprises:
inputting, into the 3D animation file, information of an image selected by the user, the image information serving as information of a background image of the 3D modeling data or information of a texture image to be mapped to the 3D modeling data.

11. The method according to one of claims 9 or 10, wherein generating the animation comprises:
displaying image data corresponding to the background image information used as the background image of the 3D modeling data, when the background image information is stored in the 3D animation file.

12. The method according to one of claims 9 to 11, wherein the 3D animation file includes a user attribute field in which the image information is stored.

13. The method according to one of claims 9 to 12, wherein the 3D animation file is stored from a service provider or manufacturer of the mobile communication terminal to the mobile communication terminal through a wireless data network or an external device.
